# EUROPEAN PATENT APPLICATION

(11) **EP 4 459 772 A1**
(43) Date of publication of application: **06.11.2024**
(21) Application number: 22947404.4
(22) Date of filing: 24.06.2022
(51) Int. Cl.: H01M 50/40, H01M 50/457, H01M 50/409

(54) **COMPOSITE SEPARATOR, PREPARATION METHOD THEREFOR, AND SECONDARY BATTERY COMPRISING COMPOSITE SEPARATOR**

(71) Applicant: Contemporary Amperex Technology Co., Limited, Ningde City, Fujian PRC 352100 (CN)
(72) Inventor: WANG, Zhaoguang, Ningde, Fujian 352100 (CN); YANG, Jianrui, Ningde, Fujian 352100 (CN); SUN, Chengdong, Ningde, Fujian 352100 (CN); HUANG, Siying, Ningde, Fujian 352100 (CN)
(74) Representative: Kraus & Lederer PartGmbB
(86) International application number: PCT/CN2022/101191
(87) International publication number: WO 2023/245637

(57) **Abstract**

The present application provides a composite separator, which includes: a first base film, a second base film, and a coating disposes between the first base film and the second base film, a peel force between the first base film and the coating is equal to or higher than 10 N/mm; and/or a peel force between the second base film and the coating is equal to or higher than 10 N/mm. By configuring the composite separator of the present application as a structure of first base film-coating-second base film, the mechanical strength of the composite separator can be effectively maintained, the peeling performance can be ensured, thereby effectively increasing the heat resistance, reducing the influence of thermal effects on the composite separator, and ensuring the safety of the battery over an extended period of use.

## Description

### TECHNICAL FIELD

The present application relates to the technical field of secondary batteries, and in particular, to a composite separator, a preparation method thereof, and a secondary battery containing the composite separator.

### BACKGROUND

In recent years, secondary batteries have developed rapidly, especially after "carbon neutrality" was proposed worldwide, secondary batteries as an effective energy storage technology have attracted widespread attention in the industry.

As the new energy resources industry keeps developing, customers are expecting more and more from secondary batteries in terms of their performance. For example, safety requirements for secondary batteries are becoming increasingly important.

Therefore, there remains a key challenge in how to improve the safety performance of batteries in the art.

### SUMMARY

The present application is made in view of the above-mentioned technical problems, and provides a composite separator and a preparation method thereof, a secondary battery having the composite separator, a battery module, a battery pack, and an electric device. The composite separator of the present application adopts a method of base film/coating/base film, and the peel force between the base film and the coating is controlled within a specific range, which can effectively maintain the mechanical strength of the composite separator itself and reduce the influence of thermal effect on the composite separator on the basis of maintaining the advantages of the original base film, and by applying the composite separator to a secondary battery, the safety of the battery for long-term use can be ensured.

In order to achieve the above object, a first aspect of the present application is to provide a composite separator, and the composite separator includes: a first base film, a second base film, and a coating disposed between the first base film and the second base film, and a peel force between the first base film and the coating is equal to or higher than 10 N/mm; and/or, a peel force between the second base film and the coating is equal to or higher than 10 N/mm. By arranging the composite separator of the present application as a three-layer structure of first base film-coating-second base film, and controlling the peel force of the composite separator within the above range, the following effects can be achieved: a good adhesion performance is provided between the composite separators and the coating, and no separation, delamination, and peeling-off of the coating will occur during the battery preparation process, and the base film and the coating with the specific peel force can fit smoothly, so that the advantage of heat resistance of the composite separator can be exhibited to ensure the safety of the battery.

In some embodiments, the coating includes a granular binder, optionally, the binder includes at least one selected from a polyacrylate compound, a polyvinylidene fluoride-based polymer, a polyacrylic compound, carboxymethyl cellulose, styrene-butadiene rubber, polyurethane, and phenolic resin. By selecting a specific binder material, the following effects can be achieved: the specific binder has a certain viscosity, which enables the base film and the coating adhere well with a good peeling performance, while avoiding the occurrence of phenomena such as delamination, so as to ensure that the peel force between the first base film and/or the second base film and the coating of the present application is equal to or higher than 10 N/mm.

In some embodiments, an average particle size by volume Dv50 of the granular binder is 0.2 µm-1.0 µm, optionally 0.3 µm-0.6 µm. By controlling the average particle size by volume Dv50 of the granular binder within the above range, the following effects can be achieved: if the particle size is too large, the adhesion between the coating and the base film will decrease; if the particle size is too small, the apertures are prone to become blocked and the air permeability of the composite separator is reduced, so the average particle size needs to be controlled, so as to ensure that the peel force between the first base film and/or the second base film and the coating of the present application is all equal to or higher than 10 N/mm.

In some embodiments, a longitudinal tensile strength of the first base film is equal to or higher than 300 kgf/cm², and a transverse tensile strength thereof is equal to or higher than 500 kgf/cm²; and/or, a longitudinal tensile strength of the second base film is equal to or higher than 300 kgf/cm², and a transverse tensile strength thereof is equal to or higher than 200 kgf/cm². By controlling the longitudinal tensile strength and transverse tensile strength of the first base film and the second base film respectively within the above ranges, the following effects can be achieved: the goal of controlling the tensile strength of the first/second base film is to ensure the tensile strength of the composite separator, and, depending on the tensile strength of the final composite separator, the tensile strength of the first/second base film needs to be controlled.

In some embodiments, a ratio of the longitudinal tensile strength of the first base film to the longitudinal tensile strength of the second base film is between 0.18 and 2.

In some embodiments, a ratio of the transverse tensile strength of the first base film to the transverse tensile strength of the second base film is between 1 and 2.5.

By controlling the ratios of the transverse tensile strength and/or longitudinal tensile strength between the first base film and the second base film within the above range, the following effects can be achieved: by controlling the ratios of the tensile strength of the first base film/second base film, different tensile strengths of the composite separator can be achieved, which can serve as a reference for the final use, while ensuring the composite separator to be in a normal state without deformed due to occasional high temperature during a long-term battery use, thereby further improving the safety performance of the battery.

In some embodiments, a porosity of the first base film is 20%-80%, optionally 30%-50%; and/or, a porosity of the second base film is 25%-85%, optionally 40%-70%. By controlling the porosity of the first base film and the second base film within the above ranges, the following effects can be achieved: ions in the electrolyte can pass through normally and quickly to complete the exchange, ensuring the stability of the battery performance.

In some embodiments, a ratio of the porosity of the first base film to the porosity of the second base film is equal to or higher than 0.2 and less than 1, and optionally between 0.3 and 0.6. By controlling the ratio of the porosity of the first base film to the porosity of the second base film within the above range, the following effects can be achieved: the conditions for the passage of ions in the electrolyte can be satisfied, ensuring a rapid exchange of the ions and maintaining the stability of the battery cell performance.

In some embodiments, a ratio of a thickness of the first base film to a thickness of the second base film is between 0.5 and 1.5. By controlling the ratio of the thickness of the first base film to the thickness of the second base film within the above range, the following effects can be achieved: the capacity of the composite separator is increased, and a thinner composite separator can effectively reduce the product cost.

In some embodiments, a material of the first base film and a material of the second base film are the same or different, and are respectively at least one selected from polyolefin, polyether, polyether etherketone, ethylene terephthalate, polyimide, polytetrafluoroethylene, polyvinylidene tetrafluoride, and polyvinyl alcohol. By selecting specific materials for the first base film and the second base film, the following effects can be achieved: the basic physical properties of the composite separator can be ensured to meet the performance requirements of the battery, and the performance can be enhanced with simple processing.

In some embodiments, the coating further includes an inorganic particle, the inorganic particle is at least one selected from boehmite (y-AlOOH), aluminum oxide (Al₂O₃), barium sulfate (BaSO₄), magnesium oxide (MgO), magnesium hydroxide (Mg(OH)₂), silicon oxide compound SiOₓ (0 < x ≤ 2), tin dioxide (SnO₂), titanium oxide (TiO₂), calcium oxide (CaO), zinc oxide (ZnO), zirconium dioxide (ZrO₂), yttrium oxide (Y₂O₃), nickel oxide (NiO), hafnium dioxide (HfO₂), cerium oxide (CeO₂), zirconium titanate (ZrTiO₃), barium titanate (BaTiO₃), magnesium fluoride (MgF₂), Pb(Zr,Ti)O₃ (PZT), Pb₁₋ₓLaₓZr_{1-y}T_{iy}O₃ (PLZT), PB(Mg₃Nb_{2/3})O₃-PbTiO₃ (PMN-PT). By selecting specific inorganic particles, the following effects can be achieved: the composite separator can have good temperature resistance and good wetting/transfer performance of the electrolyte.

In some embodiments, a coverage of the coating on the first base film is 90%-100%; and/or, a surface density of the coating on the first base film is 1.2 g/m²-5.7 g/m²; and/or, a thickness of the coating is 0.5 µm-8 µm. By controlling the coverage, the surface density and the thickness of the coating on the first base film within the above ranges, the following effects can be achieved: the composite separator has good temperature resistance and good ion-transferring performance without causing closed aperture/clogging and the like, so as to ensure that the peel force between the first base film and/or the second base film and the coating of the present application is equal to or higher than 10 N/mm.

In some embodiments, a longitudinal tensile strength of the composite separator is equal to or higher than 1000 kgf/cm², optionally 1500 kgf/cm²-2000 kgf/cm²; and/or, a transverse tensile strength of the composite separator is equal to or higher than 1000 kgf/cm², optionally 1200 kgf/cm²-2000 kgf/cm²; and/or, an air permeability of the composite separator is equal to or less than 400 s/100 cc, optionally 200 s/100 cc-300 s/100 cc. By controlling the longitudinal tensile strength, the transverse tensile strength and the air permeability of the composite separator within the above ranges, the following effects can be achieved: the composite separator with a certain tensile strength can avoid phenomena such as rupture, cracking, etc. during the production process which cause defective products, thus causing safety hazards; at the same time, the good tensile strength of the composite separator can ensure that the composite separator maintains good performance over a long period under the working condition of the battery cell, and does not cause significant material deformation thus causing safety hazards due to occasional excessive temperature.

A second aspect of the present application is to provide a preparation method of a composite separator.

The preparation method is a preparation method of the composite separator in the first aspect of the present application, which includes the following procedures:
procedure 1: preparing a first base film and a second base film;
procedure 2: preparing a coating slurry including a binder and, optionally, an inorganic particle;
procedure 3: coating the coating slurry on the first base film to form a coating; and
procedure 4: laminating the second base film on the coating, and drying to obtain the composite separator.

A third aspect of the present application is to provide a secondary battery, which includes the composite separator according to the first aspect of the present application or a composite separator prepared by the method according to the second aspect of the present application.

A fourth aspect of the present application is to provide a battery module, which includes the secondary battery according to the third aspect of the present application.

A fifth aspect of the present application is to provide a battery pack, which includes the battery module according to the fourth aspect of the present application.

The sixth aspect of the present application is to provide an electric device, which includes at least one of the secondary battery according to the third aspect of the present application, the battery module according to the fourth aspect of the present application, and the battery pack according to the fifth aspect of the present application.

The composite separator of the present application can effectively maintain the mechanical strength of the composite separator itself to ensure the peeling performance thereof, thereby effectively increasing the heat resistance and reducing the influence of thermal effects on the composite separator. By applying the composite separator in a secondary battery, it can ensure the safety of the battery cell for extended period of use.

### BRIEF DESCRIPTION OF THE DRAWINGS

FIG. 1 is a schematic diagram of the composite separator of an embodiment of the present application;
FIG. 2 is a schematic diagram of the secondary battery of an embodiment of the present application;
FIG. 3 is an exploded view of the secondary battery of the embodiment of the present application shown in FIG. 2;
FIG. 4 is a schematic diagram of the battery module of an embodiment of the present application;
FIG. 5 is a schematic diagram of the battery pack of an embodiment of the present application;
FIG. 6 is an exploded view of the battery pack of the embodiment of the present application shown in FIG. 5;
FIG. 7 is a schematic diagram of an electric device in which the secondary battery is used as a power source according to an embodiment of the present application.

### Reference numbers in the drawings are as follows:

1 battery pack, 2 upper container body, 3 lower container body, 4 battery module, 5 secondary battery, 51 casing, 52 electrode assembly, and 53 top cover assembly.

### DETAILED DESCRIPTION OF THE EMBODIMENTS

Hereinafter, embodiments of the cathode plate, secondary battery, battery module, battery pack and electric device of the present application will be specifically disclosed in detail with reference to the accompanying drawings. However, unnecessary detailed description may be omitted. For example, detailed descriptions of well-known items and repeated descriptions of substantially the same configurations may be omitted. This is to avoid the following description from becoming unnecessarily lengthy and to facilitate the understanding of those skilled in the art. In addition, the drawings and the following descriptions are provided for those skilled in the art to fully understand the present application, and are not intended to limit the subject matter described in the claims.

The "range" disclosed in the application is defined in the form of lower limit and upper limit, and the given range is limited by selecting a lower limit and an upper limit, and the selected lower limit and upper limit define the boundary of a special range. Ranges defined in this manner may be inclusive or exclusive and may be combined arbitrarily, i.e., any lower limit may be combined with any upper limit to form a range. For example, if ranges of 60-120 and 80-110 are listed for a particular parameter, it is understood that ranges of 60-110 and 80-120 are contemplated. Additionally, if the minimum range values 1 and 2 are listed, and if the maximum range values 3, 4, and 5 are listed, the following ranges are all expected: 1-3, 1-4, 1-5, 2- 3, 2-4, and 2-5. In the present application, unless otherwise stated, the numerical range "a-b" represents an abbreviated representation of any combination of real numbers between a and b, where a and b are both real numbers. For example, the numerical range "0-5" indicates that all real numbers between "0-5" have been listed in this article, and "0-5" is only an abbreviated representation of the combination of these values. In addition, when expressing that a certain parameter is an integer ≥ 2, it is equivalent to disclosing that the parameter is an integer such as 2, 3, 4, 5, 6, 7, 8, 9, 10, 11, 12, etc.

Unless otherwise specified, all implementation modes and optional implementation modes of the present application may be combined with each other to form new technical proposals.

Unless otherwise specified, all technical features and optional technical features of the present application may be combined with each other to form new technical proposals.

Unless otherwise specified, "include" and "comprise" mentioned in the application represent an open-ended type or a closed-ended type. For example, the "include" and "comprise" may mean that other components not listed may be included or comprised, or only listed components may be included or comprised.

Unless otherwise specified, in the present application, the term "or" is inclusive. For example, the phrase "A or B" means "A, B, or both A and B." More specifically, the condition "A or B" is satisfied by either: A is true (or exists) and B is false (or does not exist); A is false (or does not exist) and B is true (or exists); or both A and B are true (or exist).

A secondary battery includes a cathode plate, an anode plate, an electrolyte, and a separator. In the secondary battery, the separator is arranged between the cathode plate and the anode plate, which is mainly for preventing the short circuit of cathode plate and the anode plate and allowing ions to pass through.

### Composite Separator

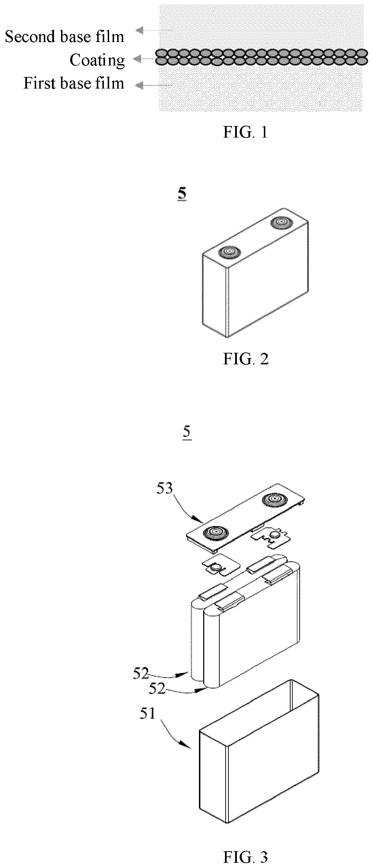

The composite separator of the first aspect of the present application, as shown in FIG. 1, includes: a first base film, a second base film, and a coating disposed between the first base film and the second base film, a peel force between the first base film and the coating is equal to or higher than 10 N/mm; and/or, the peel force between the second base film and the coating is equal to or higher than 10 N/mm. By configuring the composite separator as a three-layer structure such as the first base film-coating-second base film, the three-layer structure can effectively maintain the mechanical strength of the base film itself, and the coating used to bond the film layers can effectively ensure the peeling performance of the composite separator, and finally make the peel force of the composite separator equal to or higher than 10 N/m. Moreover, the high-temperature-resistant material in the coating can effectively increase the heat resistance of the composite separator, reduce the influence of thermal effects on the separator, and ensure the safety of the battery cell over a long period of use.

In some embodiments, the longitudinal tensile strength (hereinafter also referred to as MD (machine direction)) of the composite separator is equal to or higher than 1000 kgf/cm², optionally 1500 kgf/cm²-2000 kgf/cm²; and the transverse tensile strength (hereinafter also referred to as TD (transverse direction)) is equal to or higher than 1000 kgf/cm², and optionally 1200 kgf/cm²-2000 kgf/cm²; and the air permeability is equal to or less than 400 s/100 cc, and optionally 200 s/100 cc-300 s/100 cc. By configuring the longitudinal tensile strength and the transverse tensile strength of the composite separator within the above ranges, the two biaxial tensile strengths can ensure the normal production process without the rupture of the composite separator. Furthermore, by configuring the air permeability within the above range, the rate at which lithium ions can pass through the composite separator can be ensured.

In some embodiments, the longitudinal tensile strength of the first base film is equal to or higher than 300 kgf/cm², and the transverse tensile strength thereof is equal to or higher than 500 kgf/cm², and the longitudinal tensile strength of the second base film is equal to or higher than 300 kgf/cm², and the transverse tensile strength thereof is equal to or higher than 200 kgf/cm². By configuring the biaxial tensile strengths of the two base films within the above ranges, it is ensured that the biaxial tensile strength of the obtained composite separator is within the range as specified above.

In some embodiments, the ratio of the longitudinal tensile strength of the first base film to the longitudinal tensile strength of the second base film is 0.18-2; and/or, the ratio of the transverse tensile strength of the first base film to the transverse tensile strength of the second base film is 1-2.5. By configuring the ratios of the longitudinal tensile strengths and the transverse tensile strengths of the two base films to be within the above-mentioned ranges respectively, it is ensured that the biaxial tensile strength of the obtained composite separator is within the above-mentioned range.

In some embodiments, the porosity of the first base film is 20%-80%, optionally 30%-50%; and/or, the porosity of the second base film is 25%-85%, optionally 40%-70%. Porosity is a physical property that characterizes the passage of lithium ions in the electrolyte. By configuring the porosity of the first base film and the second base film within the above ranges, the passage of lithium ions in the electrolyte is ensured.

In some embodiments, the ratio of the porosity of the first base film to the porosity of the second base film is equal to or greater than 0.2 and less than 1, and optionally 0.3-0.6. By configuring the porosity ratio between the first base film and the second base film within the above range, the passage of lithium ions in the electrolyte is ensured.

In some embodiments, the ratio of the thickness of the first base film to the thickness of the second base film is 0.5-1.5. By configuring the thickness ratio between the first base film and the second base film within the above range, it is ensured that the biaxial tensile strength of the obtained composite separator is within the above range.

In some embodiments, the materials of the first base film and the second base film of the composite separator are the same or different, and are respectively at least one material selected from polyolefin, polyether, polyether etherketone, ethylene terephthalate, polyimide, polytetrafluoroethylene, polyvinylidene tetrafluoride, and polyvinyl alcohol. These materials are selected as the first base film and the second base film in terms of their strength, thickness, and basic heat resistance. Optionally, the polyolefin is at least one selected from polyethylene (PE) and polypropylene (PP).

In some embodiments, the coating includes a granular binder. Optionally, the granular binder includes a polyacrylate compound, a polyvinylidene fluoride-based polymer, a polyacrylic compound, carboxymethyl cellulose, styrene-butadiene rubber, polyurethane, and phenolic resin. These materials are selected as the binder of the coating in terms of their strength, thickness, and basic heat resistance.

In some embodiments, the average particle size Dv50 of the granular binder is 0.2µm-1.0 µm, optionally 0.3µm-0.6 µm. The average particle size Dv50 of the granular binder plays a key role in the heat resistance of the final composite separator. If the size is too large, it will cause uneven heat resistance, and if the size is too small, it will cause the pores of the separator to be blocked. Therefore, by configuring the average particle size Dv50 of the granular binder within the above range, the heat resistance of the final composite separator is ensured.

In some embodiments, the coating further includes inorganic particles which includes at least one selected from boehmite (γ-AlOOH), aluminum oxide (Al₂O₃), barium sulfate (BaSO₄), magnesium oxide (MgO), magnesium hydroxide (Mg(OH)₂), a silicon oxide compound SiOₓ (0 < x ≤ 2), tin dioxide (SnO₂), titanium oxide (TiO₂), calcium oxide (CaO), zinc oxide (ZnO), zirconium dioxide (ZrO₂), yttrium oxide (Y₂O₃), nickel oxide (NiO), hafnium dioxide (HfO₂), cerium oxide (CeO₂), zirconium titanate (ZrTiO₃), barium titanate (BaTiO₃), magnesium fluoride (MgF₂), Pb(Zr,Ti)O₃ (PZT), Pb₁₋ₓLaₓZr_{1-y}Ti_{y}O₃ (PLZT), PB(Mg₃Nb_{2/3})O₃-PbTiO₃ (PMN-PT). These inorganic particle materials are selected as the coating material in terms of their high heat resistance and ease of modification on the base film.

In some embodiments, the coverage of the coating on the first base film is 90%-100%; and/or, the surface density of the coating on the first base film is 1.2 g/m²-5.7 g/m²; and/or, the thickness of the coating is 0.5 µm-8 µm. By setting the parameters of the coating within the above ranges, it is ensured that the biaxial tensile strength and peel force of the obtained composite separator are within the above-mentioned ranges.

The second aspect of the present application is to provide a method for preparing a composite separator, and the preparation method is a method for preparing the composite separator of the present application, which includes the following procedures:
Procedure 1: providing a first base film and a second base film respectively;
Procedure 2: preparing a coating slurry, which includes a binder and optionally inorganic particles;
Procedure 3: coating the coating slurry on the first base film to form a coating; and
Procedure 4: laminating the second base film on the coating layer.

In some embodiments, the pressure of lamination is equal to or higher than 1 N, optionally equal to or higher than 2 N; and/or, the drying temperature is equal to or higher than 45°C, optionally 45°C-70°C; and/or, the drying time is equal to or more than 10 minutes, optionally equal to or more than 2 hrs. By controlling the pressure during lamination and the temperature and time during drying, it is guaranteed to obtain the composite separator of the present application.

### Secondary Battery

In addition, the secondary battery, the battery module, the battery pack, and the electric device of the present application will be described below with reference to the accompanying drawings.

In one embodiment of the present application, a secondary battery is provided.

Typically, a secondary battery includes a cathode plate, an anode plate, an electrolyte, and a separator. During the charging and discharging process of the battery, active ions are intercalated and deintercalated back and forth between the cathode plate and the anode plate. The electrolyte plays the role of conducting ions between the cathode plate and the anode plate. The separator is arranged between the cathode plate and the anode plate, which is mainly configured for preventing the short circuit between the cathode and the anode, while allowing ions to pass through.

### [Cathode Plate]

The cathode plate includes a cathode current collector and a cathode film layer disposed on at least one surface of the cathode current collector, and the cathode film layer includes the cathode active material according to the first aspect of the present application.

As an example, the cathode current collector has two opposing surfaces in a thickness direction thereof, and the cathode film layer is disposed on any one or both of the two opposing surfaces of the cathode current collector.

In some embodiments, the cathode current collector may be a metal foil or a composite current collector. For example, an aluminum foil can be used as the metal foil. The composite current collector may include a polymer material base layer and a metal layer formed on at least one surface of the polymer material base layer. The composite current collector may be formed by forming a metal material (aluminum, an aluminum alloy, nickel, a nickel alloy, titanium, a titanium alloy, silver, and a silver alloy, etc.) on the polymer material base layer (such as polypropylene (PP), polyethylene terephthalate (PET), polybutylene terephthalate (PBT), polystyrene (PS), polyethylene (PE), etc.).

In some embodiments, the cathode active material may be a cathode active material applicable to batteries known in the art. As an example, the cathode active material may include at least one of the following materials: olivine lithium-containing phosphate, a lithium transition metal oxide, and respective modified compounds thereof. However, the present application is not limited to these materials, and other conventional materials that can be used as cathode active materials of batteries may also be used. These cathode active materials may be used alone or in combination of two or more. Examples of lithium transition metal oxide may include, but not limited to, at least one of a lithium cobalt oxide (such as LiCoO₂), a lithium nickel oxide (such as LiNiO₂), a lithium manganese oxide (such as LiMnO₂, LiMn₂O₄), a lithium nickel cobalt oxide, a lithium manganese cobalt oxide, a lithium nickel manganese oxide, a lithium nickel cobalt manganese oxide (such as LiNi_{1/3}Co_{1/3}Mm_{1/3}O₂ (also abbreviated as NCM₃₃₃), LiNi_{0.5}Co_{0.2}Mn_{0.3}O₂ (also abbreviated as NCM₅₂₃), LiNi_{0.5}Co_{0.25}Mn_{0.25}O₂ (also abbreviated as NCM₂₁₁), LiNi_{0.6}Co_{0.2}Mn_{0.2}O₂ (also abbreviated as NCM₆₂₂), and LiNi_{0.8}Co_{0.1}Mn_{0.1}O₂ (also abbreviated as NCMsn), a lithium nickel cobalt aluminum oxide (such as LiNi_{0.85}Co_{0.15}Al_{0.05}O₂) and their modified compounds, etc. An example of olivine lithium-containing phosphates may include, but not limited to, at least one of lithium iron phosphate (such as LiFePO₄ (also abbreviated as LFP)), a composite material of lithium iron phosphate and carbon, lithium manganese phosphate (such as LiMnPO₄), a composite material of lithium manganese phosphate and carbon, lithium manganese iron phosphate, and a composite material of lithium manganese iron phosphate and carbon.

In some embodiments, the cathode film layer may further optionally include a binder. As examples, the binder may include at least one of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer, and a fluorine-containing acrylate resin.

In some embodiments, the cathode film layer may also optionally include a conductive agent. As examples, the conductive agent may include at least one of superconducting carbon, acetylene black, carbon black, Ketjen black, a carbon dot, a carbon nanotube, graphene, and carbon nanofiber.

In some embodiments, the cathode plate can be prepared in the following manner: dispersing the above-mentioned components for preparing the cathode plate, such as the cathode active material, the conductive agent, the binder and any other components, in a solvent (such as N-methylpyrrolidone) to form a cathode slurry; coating the cathode slurry on the cathode current collector, and carrying out drying, cold pressing and other processes to obtain the cathode plate.

### [Anode plate]

The anode plate includes an anode current collector and an anode film layer arranged on at least one surface of the anode current collector, and the anode film layer includes an anode active material.

As an example, the anode current collector has two opposing surfaces in a thickness direction thereof, and the anode film layer is disposed on any one or both of the two opposing surfaces of the anode current collector.

In some embodiments, the anode current collector may adopt a metal foil or a composite current collector. For example, a copper foil can be used as the metal foil. The composite current collector may include a polymer material base layer and a metal layer formed on at least one surface of the polymer material base material. The composite current collector may be formed by forming a metal material (copper, a copper alloy, nickel, a nickel alloy, titanium, a titanium alloy, silver, and a silver alloy, etc.) on the polymer material base layer (such as polypropylene (PP), polyethylene terephthalate (PET), polybutylene terephthalate (PBT), polystyrene (PS), polyethylene (PE), etc.).

In some embodiments, the anode active material may be an anode active material known in the art applicable to batteries. As an example, the anode active material may include at least one of the following materials: artificial graphite, natural graphite, soft carbon, hard carbon, a silicon-based material, a tin-based material, lithium titanate, and the like. The silicon-based material may be at least one selected from elemental silicon, a silicon-oxygen compound, a silicon-carbon composite, a silicon-nitrogen composite, and a silicon alloy. The tin-based material may be at least one selected from elemental tin, a tin oxide compound, and a tin alloy. However, the present application is not limited to these materials; other conventional materials that can be used as anode active materials of batteries can also be adopted. These anode active materials may be used alone or in combination of two or more.

In some embodiments, the anode film layer may further optionally include a binder. The binder may be at least one selected from styrene-butadiene rubber (SBR), polyacrylic acid (PAA), sodium polyacrylate (PAAS), polyacrylamide (PAM), polyvinyl alcohol (PVA), sodium alginate (SA), poly(methacrylic acid) (PMAA) and carboxymethyl chitosan (CMCS).

In some embodiments, the anode film layer may further optionally include a conductive agent. The conductive agent may be at least one selected from superconducting carbon, acetylene black, carbon black, Ketjen black, a carbon dot, a carbon nanotube, graphene, and carbon nanofiber.

In some embodiments, the anode film layer may optionally include other additives, such as a thickener (such as sodium carboxymethylcellulose (CMC-Na)) and the like.

In some embodiments, the anode plate may be prepared in the following manner: dispersing the above-mentioned components for preparing the anode plate, such as the anode active material, the conductive agent, the binder and any other components, in a solvent (such as deionized water) to form an anode slurry; coating the anode slurry on the anode current collector, and carrying out drying, cold pressing and other processes to obtain the anode plate.

### [Electrolyte]

The electrolyte plays the role of conducting ions between the cathode plate and the anode plate. The present application has no specific limitation on the type of electrolyte, which can be selected according to requirements. For example, the electrolyte may be liquid, gel or all solid.

In some embodiments, the electrolyte is an electrolytic solution. The electrolyte solution includes an electrolyte salt and a solvent.

In some embodiments, the electrolyte salt may be at least one selected from lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium triflate, lithium difluorophosphate, lithium difluoro oxalate borate, lithium bis(oxalate)borate, lithium difluorobis(oxalato) phosphate, and lithium tetrafluoro oxalato phosphate.

In some embodiments, the solvent may be at least one selected from ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone.

In some embodiments, the electrolyte may optionally include additives. For example, the additives may include anode film-forming additives, cathode film-forming additives, and additives that can improve certain performances of the battery, such as additives that improve battery overcharge performance, additives that improve high-temperature or low-temperature performance of batteries, and the like.

### [Separator]

The separator in the secondary battery of the present application adopts the above-mentioned composite separator.

In some embodiments, the cathode plate, the anode plate, and the separator may be made into an electrode assembly through a winding process or a lamination process.

In some embodiments, the secondary battery may include an outer packaging. The outer packaging may be used to package the above-mentioned electrode assembly and an electrolyte.

In some embodiments, the outer packaging of the secondary battery may be a hard case, such as a hard plastic case, an aluminum case, a steel case, and the like. The outer packaging of the secondary battery may also be a soft package, such as a sachet-type soft package. The material of the soft package may be plastic, and examples of plastic include polypropylene, polybutylene terephthalate, polybutylene succinate, and the like.

The present application has no special limitation on the shape of the secondary battery, which may be cylindrical, square or any other shape. For example, FIG. 2 shows a square-shaped secondary battery 5 as an example.

In some embodiments, referring to FIG. 3, the outer packaging may include a casing 51 and a top cover 53. The casing 51 may include a bottom plate and side plates connected to the bottom plate, and the bottom plate and the side plates enclose to form an accommodating cavity. The casing 51 has an opening communicating with the accommodating cavity, and the top cover 53 can cover the opening to close the accommodating cavity. The cathode plate, the anode plate and the separator can be formed into an electrode assembly 52 through a winding process or a lamination process. The electrode assembly 52 is encapsulated in the accommodating cavity. Electrolyte is infiltrated in the electrode assembly 52. The number of electrode assembly 52 contained in the secondary battery 5 may be one or more, and those skilled in the art may select according to specific actual needs.

### Battery module

In some embodiments, the secondary battery can be assembled into a battery module, and the number of secondary batteries contained in the battery module may be one or more, and the specific number may be selected by those skilled in the art according to the application and capacity of the battery module.

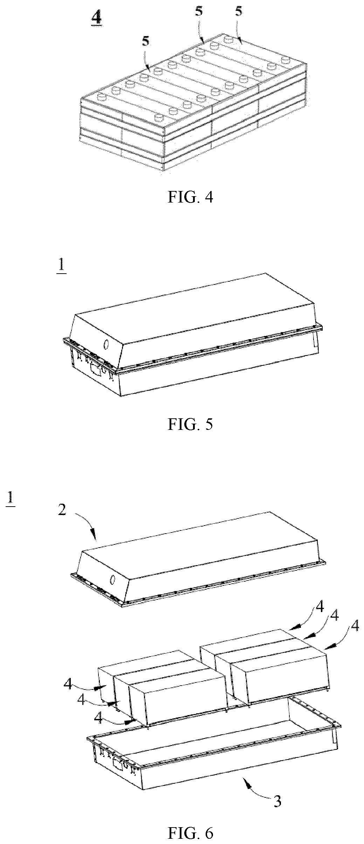

FIG. 4 is a battery module 4 as an example. Referring to FIG. 4, in the battery module 4, a plurality of secondary batteries 5 may be arranged successively along a length direction of the battery module 4. Of course, they can also be arranged in any other manner. Furthermore, the plurality of secondary batteries 5 may be fixed by fasteners.

Optionally, the battery module 4 may also include a housing having an accommodating space in which the plurality of secondary batteries 5 are accommodated.

### Battery pack

In some embodiments, the above-mentioned battery module may also be assembled into a battery pack, and the number of battery modules contained in the battery pack may be one or more, and the specific number may be selected by those skilled in the art according to the application and capacity of the battery pack.

FIGS. 5 and 6 show the battery pack 1 as an example. Referring to FIGS. 5 and 6, the battery pack 1 may include a battery container and a plurality of battery modules 4 disposed in the battery container. The battery container includes an upper container body 2 and a lower container body 3, the upper container body 2 can cover the lower container body 3 and form a closed space for accommodating the battery module 4. The plurality of battery modules 4 can be arranged in the battery container in any manner.

### Electric device

In addition, the present application also provides an electric device, which includes at least one of the secondary battery, the battery module, or the battery pack provided in the present application. The secondary battery, the battery module, or the battery pack can be used as a power source of the electric device, and can also be used as an energy storage unit of the electric device. The electrical device may include a mobile device (such as a mobile phone, a laptop, etc.), an electric vehicle (such as a pure electric vehicle, a hybrid electric vehicle, a plug-in hybrid electric vehicle, an electric bicycle, an electric scooter, an electric golf cart, an electric truck, etc.), an electric train, a ship and a satellite, an energy storage system, etc., but is not limited thereto.

The electric device can select a secondary battery, a battery module or a battery pack according to its requirements for use.

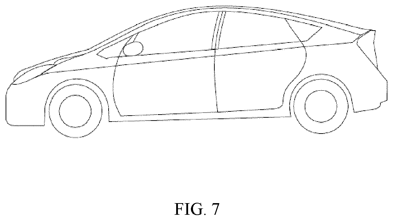

FIG. 7 is an example of an electric device. The electric device is a pure electric vehicle, a hybrid electric vehicle, or a plug-in hybrid electric vehicle. In order to meet the high power and high energy density requirements of the electric device for the secondary battery, a battery pack or a battery module may be adopted.

As another example, a device may be a mobile phone, a tablet, a laptop, or the like. The device is generally required to be light and thin, and a secondary battery cam be adopted as a power source.

### Examples

Hereinafter, examples of the present application will be described. The examples described below are exemplary and are only used for explaining the present application, and should not be construed as limiting the present application. If no specific technique or condition is indicated in the examples, it shall be carried out according to the technique or condition described in the literature in the art or according to the product specification. The reagents or instruments used without indicating the manufacturer were all commercially available conventional products.

### <Example 1>

A composite separator of Example 1 was prepared according to the following procedures 1-4.

Procedure 1: a first base film and a second base film were prepared respectively, the material of the first base film was polypropylene (PP), and the longitudinal tensile strength (MD) of the first base film was 300 kgf/cm², the transverse tensile strength (TD) thereof was 1800 kgf/cm², the porosity thereof was 35%, and the thickness thereof was 12 µm; the material of the second base film was polyethylene (PE), and the longitudinal tensile strength (MD) of the second base film was 1700 kgf/cm², and the transverse tensile strength (TD) thereof was 1800 kgf/cm², the porosity thereof was 35%, and the thickness thereof was 7 µm.

Procedure 2: a coating slurry was prepared, in which boehmite as an inorganic particle, polyacrylate as a binder, and sodium carboxymethyl cellulose (CMC-Na) as a dispersant at a dry weight ratio of 40:4.5:12.5 were uniformly mixed in an appropriate amount of deionized water to make the coating slurry with a solid content of 45% by weight;

Procedure 3: the coating slurry obtained in Procedure 2 was coated on the first base film (polypropylene film) obtained in Procedure 1 to form a coating;

Procedure 4: the second base film obtained in Procedure 1 was laminated on the coating obtained in Procedure 3, the roller pressure during lamination was 2 N, the drying temperature was 45°C, and the drying time was 10 minutes, the composite separator of the present application was thus prepared.

Regarding the peel force, that is, the peel force between the first base film and the coating was measured by the following measuring method for peel force, and the results are shown in Table 1.

### <Examples 2-15>

In Examples 2-15, according to the compositions shown in Table 1, a composite separator was prepared by the same preparation method as in Example 1, and the peel force was measured, as specifically shown in Table 1.

### < Comparative Example 1>

In Comparative Example 1, a composite separator was prepared according to the compositions shown in Table 1. The composite separator was mainly composed of a first base film and a second base film. The binder in the coating was non-granular polyacrylic acid, and the peel force was the peel force between the first base film and the adhesive, as specifically shown in Table 1.

### < Comparative Example 2>

In Comparative Example 2, a composite separator with the compositions shown in Table 1 was prepared by the same preparation method as in Example 1, the difference being that the preparation process was adjusted so that the peel force was 4.1.

### <Performance Evaluation>

### [Dv50 of the binder]

In the present application, Dv50 was the corresponding particle size (unit: µm) when a cumulative volume distribution percentage of the binder reaches 50%. Dv50 was a well-known meaning in the art, and can be measured with instruments and methods known in the art. For example, it can be conveniently measured by laser particle size analyzer such as the Mastersizer 2000E laser particle size analyzer from Malvern Instruments Co., Ltd., UK, with reference to GB/T 19077-2016 particle size distribution laser diffraction method.

### [Surface density of the coating on the first base film]

The surface density of the coating on the first base film was determined as follows.
1) The weight of the first base film and the second base film was respectively weighted in Procedure 1, and the weight of the composite separator obtained was weighted after the completion of Procedure 4, and the weight of the first base film and the weight of the second base film were subtracted from the weight of the composite separator to obtain the weight of the coating; and
2) the surface density of the coating on the first base film was calculated according to the formula: surface density = weight of the coating/surface area of the coating.

### [Peel force]

The peel force was measured as follows.
1) Sample preparation: 25 mm of a termination tape (specification: 50 um*25 mm*200 m) was adhered on each side of the obtained composite separator, and samples were punched out with a width of 15 mm and an effective length of > 40 mm using a punching machine, to obtain 5 to 10 parallel samples, the surface with the termination tape was bonded to a steel plate bonded with a double-sided tape, and a pressure roller of a certain mass was used to move back and forth 5 times; the 15 mm-wide stripe was placed between the composite separator and the termination tape, and a masking tape was glued on both sides at the connection position;
2) Test: the tensile machine was set with a parameter speed of 50 mm/min and an initial distance between the clamps of 40 mm, the steel plate was clamped and placed in the bottom, and the stripe was clamped and placed on the top, and the test started with a pre-stretch of 5 mm, and an average value of 5 times of good repeatability of each group was taken.

### [Heat resistance]

Sample preparation: a punching machine was used to punch out samples with a width of 50 mm and a length of 100 mm, with 5 to 10 parallel samples, the samples were placed on a sheet of A4 paper, with the four edges thereof fixed with paper clips, and the A4 paper having the samples thereon was placed on a corrugated cardboard with a thickness of 1 mm-5 mm.

The temperature of the blast oven was raised to 150°C, the above-mentioned samples of the composite separator placed on the corrugated cardboard were placed into the oven, the temperature was raised at a rate of 10°C/min until 250°C, and held for 60 minutes, the length of the composite separator at this point was measured, and the value was marked as a. The shrinkage in the length direction = (100-a)/100*100%. This characterizes the heat resistance of the composite separator.

**Table 1**

| No. | Preparation Process | | | | | | | | | Composite separator | Perform ance test |
|---|---|---|---|---|---|---|---|---|---|---|---|
| | First base film | Coating | | | | Secon d base film | Procedure 4 | | | Peel force between first base film and coating (N/mm) | Heat resistanc e |
| | Materi al | Binder | DV50 of binde r (um) | Surfac e densit y (g/m²) | Thickne ss (µm) | Materi al | Roller pressur e (N) | Drying temperat ure (°C) | Drying time | | |
| Example 1 | PP | Polyacryl ate | 0.38 | 2.3 | 2 | PE | 2 N | 45 | 10 min | 16.1 | 0.60% |
| Example 2 | PP | Polyacryl ate | 0.38 | 2.3 | 2 | PE | 2 N | 45 | 30 min | 17.1 | 0.40% |
| Example 3 | PP | Polyacryl ate | 0.38 | 2.3 | 2 | PE | 2 N | 45 | 1 h | 17.4 | 0.30% |
| Example 4 | PP | Polyacryl ate | 0.38 | 2.3 | 2 | PE | 2N | 45 | 2 h | 16.8 | 0% |
| Example 5 | PP | Polyacryl ate | 0.20 | 2.3 | 2 | PE | 2 N | 45 | 30 min | 21.2 | 0.30% |
| Example 6 | PP | Polyacryl ate | 0.30 | 2.3 | 2 | PE | 2 N | 45 | 30 min | 19.8 | 0.40% |
| Example 7 | PP | Polyacryl ate | 0.50 | 2.3 | 2 | PE | 2 N | 45 | 30 min | 17.3 | 0.80% |
| Example 8 | PP | Polyacryl ate | 0.60 | 2.3 | 2 | PE | 2 N | 45 | 30 min | 16.1 | 0.80% |
| Example 9 | PP | Polyacryl ate | 0.70 | 2.3 | 2 | PE | 2 N | 45 | 30 min | 15.2 | 0.90% |
| Example 10 | PP | Polyacryl ate | 0.38 | 3.4 | 3 | PE | 2 N | 45 | 30 min | 17.8 | 0.10% |
| Example 11 | PP | Polyacryl ate | 0.38 | 3.4 | 3 | PE | 2 N | 45 | 1 h | 18.5 | 0.10% |
| Example 12 | PP | Polyacryl ate | 0.38 | 1.2 | 1 | PE | 2 N | 45 | 30 min | 15.2 | 0.50% |
| Example 13 | PP | Polyacryl ate | 0.38 | 4.6 | 4 | PE | 2 N | 45 | 30 min | 18.8 | 0% |
| Example 14 | PP | Polyacryl ate | 0.38 | 5.7 | 5 | PE | 2 N | 45 | 30 min | 20.3 | 0% |
| Example 15 | PE | Polyacryl ate | 0.38 | 2.3 | 2 | PE | 2 N | 45 | 30 min | 15.2 | 1.00% |
| Comparative Example 1 | PE | Polyacryl ic acid | - | 2.3 | 2 | PET | 1 N | 45 | 30 min | 4.8 | 1.20% |
| Comparative Example 2 | PP | Polyacryl ate | 1.20 | 1.2 | 1 | PE | 2 N | 45 | 30 min | 4.1 | 1.3% |

In Table 1, PP represents polypropylene, PE represents polyethylene, and PET represents polyethylene terephthalate.

From Table 1, through the comparison of Examples 1-15 and Comparative Examples 1-2, it can be seen that the composite separator of the present application is formed into a structure of first base film-coating-second base film, so that the mechanical strength of the composite separator can be effectively maintained, and its peeling performance can be ensured, thereby effectively increasing the heat resistance, reducing the influence of thermal effects on the composite separator, and ensuring the safety of the battery over a long period of use.

It should be noted that the present application was not limited to the above-mentioned embodiments. The above-mentioned embodiments are merely exemplary examples, and embodiments that have substantially the same configuration as the technical idea and exert the same effects within the scope of the technical proposals of the present application are included in the technical scope of the present application. In addition, without departing from the scope of the present application, various modifications added to the embodiments that are conceivable by those skilled in the art, and other forms constructed by combining some components in the embodiments are also included in the scope of the present application.

## Claims

1. A composite separator, wherein,
the composite separator comprises:
a first base film, a second base film, and a coating disposes between the first base film and the second base film,
a peel force between the first base film and the coating is equal to or higher than 10 N/mm; and/or
a peel force between the second base film and the coating is equal to or higher than 10 N/mm.

2. The composite separator according to claim 1, wherein,
the coating comprises a granular binder,
optionally, the granular binder comprises at least one selected from a polyacrylate compound, a polyvinylidene fluoride-based polymer, a polyacrylic compound, carboxymethyl cellulose, styrene-butadiene rubber, polyurethane, and phenolic resin.

3. The composite separator according to claim 1 or 2, wherein,
an average particle size Dv50 of the granular binder is 0.2 µm-1.0 µm, optionally 0.3 µm-0.6 µm.

4. The composite separator according to any of claims 1 to 3, wherein,
the first base film has a longitudinal tensile strength equal to or higher than 300 kgf/cm² and a transverse tensile strength equal to or higher than 500 kgf/cm²; and/or,
the second base film has a longitudinal tensile strength equal to or higher than 300 kgf/cm² and a transverse tensile strength equal to or higher than 200 kgf/cm².

5. The composite separator according to any of claims 1 to 4, wherein,
a ratio of the longitudinal tensile strength of the first base film to the longitudinal tensile strength of the second base film is between 0.18 and 2.

6. The composite separator according to any of claims 1 to 5, wherein,
a ratio of the transverse tensile strength of the first base film to the transverse tensile strength of the second base film is between 1 and 2.5.

7. The composite separator according to any of claims 1 to 6, wherein,
a porosity of the first base film is 20%-80%, optionally 30%-50%; and/or,
a porosity of the second base film is 25%-85%, optionally 40%-70%.

8. The composite separator according to any of claims 1 to 7, wherein,
a ratio of the porosity of the first base film to the porosity of the second base film is equal to or higher than 0.2 and less than 1, and optionally between 0.3 and 0.6.

9. The composite separator according to any of claims 1 to 8, wherein,
a ratio of a thickness of the first base film to a thickness of the second base film is between 0.5 and 1.5.

10. The composite separator according to any of claims 1 to 9, wherein,
a material of the first base film and a material of the second base film are the same or different, and are respectively at least one selected from polyolefin, polyether, polyether etherketone, ethylene terephthalate, polyimide, polytetrafluoroethylene, polyvinylidene tetrafluoride, and polyvinyl alcohol.

11. The composite separator according to any of claims 1 to 10, wherein,
the coating further comprises an inorganic particle.

12. The composite separator according to any of claims 1 to 11, wherein,
a coverage of the coating on the first base film is 90%-100%; and/or,
a surface density of the coating on the first base film is 1.2 g/m²-5.7 g/m²; and/or,
a thickness of the coating is 0.5 µm-8 µm.

13. The composite separator according to any of claims 1 to 12, wherein,
a longitudinal tensile strength of the composite separator is equal to or higher than 1000 kgf/cm², optionally 1500 kgf/cm²-2000 kgf/cm²; and/or,
a transverse tensile strength of the composite separator is equal to or higher than 1000 kgf/cm², optionally 1200 kgf/cm²-2000 kgf/cm²; and/or,
an air permeability of the composite separator is equal to or less than 400 s/100 cc, optionally 200 s/100 cc-300 s/100 cc.

14. A preparation method of a composite separator, wherein,
the preparation method is a preparation method of the composite separator according to any of claims 1 to 13, which comprises the following procedures:
procedure 1: preparing a first base film and a second base film;
procedure 2: preparing a coating slurry comprising a binder and, optionally, an inorganic particle;
procedure 3: coating the coating slurry on the first base film to form a coating; and
procedure 4: laminating the second base film on the coating, and drying to obtain the composite separator.

15. The preparation method according to claim 14, wherein,
a pressure of lamination is equal to or higher than 1 N, optionally equal to or higher than 2 N; and/or,
a drying temperature is equal to or higher than 45°C, optionally 45°C-70°C; and/or,
a drying time is equal to or more than 10 minutes, optionally equal to or more than 2 hrs.

16. A secondary battery, wherein,
the secondary battery comprises the composite separator according to any of claims 1 to 13, or a composite separator prepared by the method according to any of claims 14 and 15.

17. An electric device, wherein,
the electric device comprises the secondary battery according to claim 16.
